# EUROPÄISCHE PATENTSCHRIFT

(11) **EP 2 214 940 B1**
(45) Veröffentlichungstag und Bekanntmachung des Hinweises auf die Patenterteilung: **09.02.2011**
(21) Anmeldenummer: 08784817.2
(22) Anmeldetag: 17.07.2008
(51) Int. Cl.: B60T 8/32, B60T 7/22

(54) **FAHRERASSISTENZSYSTEM FÜR EINEN KRAFTWAGEN**
DRIVER ASSISTANCE SYSTEM FOR A MOTOR VEHICLE
SYSTÈME D'ASSISTANCE À LA CONDUITE POUR VÉHICULE AUTOMOBILE

(30) Priorität: 20.10.2007 DE 102007050221
(43) Veröffentlichungstag der Anmeldung: 11.08.2010
(73) Patentinhaber: WABCO GmbH, 30453 Hannover (DE)
(72) Erfinder: BREUER, Karsten, 31867 Lauenau (DE); KAMPING, Ruppert, 30163 Hannover (DE); KITTERER, Hartmut, 89231 Neu-Ulm (DE)
(74) Vertreter: Lauerwald, Jörg
(86) Internationale Anmeldenummer: PCT/EP2008/005819
(87) Internationale Veröffentlichungsnummer: WO 2009/049697

(56) Entgegenhaltungen:
- EP-A- 1 010 596
- DE-A1- 10 220 566
- DE-A1- 19 750 913
- DE-A1- 19 944 556
- DE-C1- 19 749 296
- FR-A- 2 840 866

## Beschreibung

Die Erfindung betrifft ein Fahrerassistenzsystem für einen Kraftwagen, mit mindestens einem Fahrdatensensor zum Erfassen von den Fahrzustand des Kraftwagens charakterisierenden Fahrdaten und einer elektrischen Steuerung, die ausgebildet ist, um beim Vorliegen von vorbestimmten Fahrdaten eine autonome Notbremsung des Kraftwagens auszulösen. Gemäß einem zweiten Aspekt betrifft die Erfindung ein Verfahren zum Betreiben eines Kraftwagens.

Fahrerassistenzsysteme, die beim Vorliegen von vorbestimmten Fahrdaten eine autonome Notbremsung auslösen, sind beispielsweise unter der Bezeichnung Bremsassistenzsystem oder ACC (Adaptive Cruise Control, adaptives Fahrsteuersystem) bekannt. Derartige Fahrerassistenzsysteme erfassen eine Vielzahl von Fahrdaten des Kraftwagens und ermitteln anhand eines Algorithmus, ob mit hoher Wahrscheinlichkeit eine Situation vorliegt, in der ein Unfall dadurch droht, dass der Fahrer des Kraftwagens zu zögerlich oder gar nicht bremst, obwohl er das tun müsste. Sobald das Fahrzeug steht, beenden bekannte Fahrerassistenzsysteme den Eingriff und überlassen die Steuerung des Fahrzeugs wieder vollständig dem Fahrer.

Die DE19750913A1 offenbart ein automatisches Bremsregelsystem für Kraftfahrzeuge, wobei ein Hindernis vor dem Fahrzeug erfasst wird, um das Fahrzeug automatisch zu bremsen. In einem Fall, bei dem das Fahrzeug in einen im wesentlichen gestoppten Zustand durch das automatische Bremsen gebracht worden ist, wird eine Bremskraft bestimmt, um das Fahrzeug in dem gestoppten Zustand zu halten, wobei das Fahrzeug einer Bremsregelung mit der vorbestimmten Bremskraft unterworfen wird. In einem Fall, bei dem das Fahrzeug eine Fahrzeuggeschwindigkeit eines vorbestimmten Wertes erreicht hat, wird die Bremskraft freigegeben. Die automatische Bremsregelung wird allein aufgrund einer vorbestimmten Geschwindigkeit beendet.

Nachteilig an bekannten Fahrerassistenzsystemen ist, dass sie lediglich Unfälle zu vermeiden oder zu mildern in der Lage sind, die auf einen Fehler des Fahrers zurückzuführen sind.

Der Erfindung liegt die Aufgabe zugrunde, Nachteile im Stand der Technik zu überwinden. Die Erfindung löst die Aufgabe durch ein gattungsgemäßes Fahrerassistenzsystem, das eine Vorderfahrzeugdetektionseinrichtung umfasst, die eingerichtet ist zum Detektieren eines sich in einer Fahrtrichtung des Kraftwagens vor dem Kraftwagen befindenden Vorder-Fahrzeugs, wobei die elektrische Steuerung eingerichtet ist, um unmittelbar nach einer Notbremsung dann, wenn die Vorderfahrzeugdetektionseinrichtung das Vorder-Fahrzeug detektiert, eine Bremse des Kraftwagens in einer Bremsstellung zu halten oder in die Bremsstellung zu bringen, wobei erfindungsgemäß eine Feststellbremse des Kraftwagens in die Bremsstellung gebracht wird.

Gemäß einem zweiten Aspekt löst die Erfindung das Problem durch ein Verfahren zum Betreiben eines Kraftwagens, mit den Schritten: (i) Erfassen, ob unmittelbar vorher eine Notbremsung durchgeführt wurde, (ii) wenn ja, Erfassen, ob sich in einer Fahrtrichtung des Kraftwagens vor dem Kraftwagen ein Vorder-Fahrzeug befindet, (iii) wenn ja, Erfassen, ob der Kraftwagen steht, und (iv) wenn ja, Bringen einer Feststellbremse in eine Bremsstellung.

Vorteilhaft an der Erfindung ist, dass der Fall vermeidbar ist, dass ein nach einer Notbremsung bereits stehender Kraftwagen durch ein auffahrendes Fahrzeug auf das Vorder-Fahrzeug aufgeschoben wird und dieses dadurch beschädigt. In einer solchen Situation wird auch eine Beschädigung des Kraftwagens an seiner Vorderseite verhindert.

Vorteilhaft ist zudem die leichte Implementierbarkeit der Erfindung. So ist es ausreichend, bestehende Fahrerassistenzsysteme umzuprogrammieren, um die Erfindung ausführen zu können. Vorteilhaft ist weiterhin, dass auch dann, wenn der Fahrer des Kraftwagens aufgrund des Unfalls verletzt oder gar bewusstlos ist, der Kraftwagen sicher am Platz fixiert wird, sofern dies aus dem Grund notwendig ist, dass sich vor dem Kraftwagens ein Vorder-Fahrzeug befindet.

Im Rahmen der vorliegenden Beschreibung wird unter einer Notbremsung insbesondere ein Bremsmanöver verstanden, bei dem eine oberhalb eines vorgegebenen Grenzwerts liegende Bremskraft aufgebracht wird, insbesondere eine maximale Bremskraft. Diese Bremskraft wirkt insbesondere so lange auf die Betriebsbremsen des Kraftwagens, bis dieser zum Stillstand gekommen ist. Eine derartige Notbremsung kann autonom oder fahrergesteuert sein.

Unter einer Vorderfahrzeugdetektionseinrichtung ist insbesondere jede Vorrichtung zu verstehen, die dazu ausgebildet und vorgesehen ist, um das Vorhandensein eines Fahrzeugs in Fahrtrichtung vor dem Kraftwagens zu ermitteln. Diese Vorderfahrzeugdetektionseinrichtung kann so eingerichtet sein, dass sie lediglich Fahrzeuge ab einer bestimmten Größe als Fahrzeuge erfasst. Beispiele für Vorderfahrzeugdetektionseinrichtungen sind Abstandsensoren, wie Radar- oder Ultraschall-Sensoren, oder Kameras, wie beispielsweise eine Spurhaltekamera oder eine Kamera eines Unfalldatenschreibers. Unter einem Fahrdatensensor wird insbesondere jegliche Vorrichtung verstanden, die ein elektrisches Signal abgibt, aus dem der Bewegungszustand des Kraftwagens ableitbar ist. Beispiele für Fahrdatensensoren sind Beschleunigungs-, Gierraten-, Geschwindigkeits-, Lenkwinkel- oder Bremspedalstellungssensoren. Die Vorderfahrzeugdetektionseinrichtung gibt beispielsweise in regelmäßigen Zeitabständen ein Vorhanden-Signal ab, das das etwaige Vorhandensein eines Vorderfahrzeugs kodiert. Auch ein Unterbrechen eines ansonsten kontinuierlich erfolgenden Nichtvorhanden-Signals wird als Abgeben des Vorhanden-Signals verstanden. Maßgeblich ist, dass für die elektrische Steuerung erkennbar ist, dass ob ein Vorderfahrzeug vorhanden ist. Nach einer Notbremsung erfasst die elektrische Steuerung, ob ein Vorderfahrzeug vorhanden ist und aktiviert, wenn ja, eine Feststellbremse, die den Kraftwagen sicher abstellt.

Gemäß einer bevorzugten Ausführungsform ist die elektrische Steuerung eingerichtet, um nach einer Notbremsung die Bremse, insbesondere die Betriebsbremse und/oder die Feststellbremse, in eine Lösestellung zu bringen oder in der Lösestellung zu halten, wenn kein Vorder-Fahrzeug detektiert wird. Es kann vorgesehen sein, dass das Lösesignal nicht abgegeben wird, wenn von dem Fahrer das Bremspedal betätigt wird.

In einer bevorzugten Ausführungsform umfasst das Fahrerassistenzsystem einen Geschwindigkeitssensor, wobei die elektrische Steuerung eingerichtet ist, um eine Feststellbremse in die Bremsstellung zu bringen, wenn der Kraftwagen nach einem Stillstand aufgrund einer Notbremsung von alleine wieder anrollt. Das kann beispielsweise dann geschehen, wenn ein Fahrzeug von hinten auffährt, der Kraftwagen auf einer Gefällestrecke steht oder der Motor über eine Viskokupplung den Kraftwagen unbeabsichtigt in Bewegung versetzt. Bevorzugt erfasst die elektrische Steuerung zudem permanent Eingaben des Fahrers über eine Eingabevorrichtung und führt die oben beschriebenen Aktionen nur dann aus, wenn keine entgegengerichtete Eingabe des Fahrers vorliegt.

Bevorzugt ist vorgesehen, dass die elektrische Steuerung eingerichtet ist, um nur nach einer autonomen Notbremsung die Bremse in die Bremsstellung oder die Lösestellung zu bringen oder zu halten. Insbesondere ist die elektrische Steuerung bevorzugt so eingerichtet, dass sie nur nach einer autonomen Notbremsung den Kraftwagen dauerhaft anhält. Es ist alternativ jedoch auch möglich, dass die elektrische Steuerung so eingerichtet ist, dass sie nach jeglicher Notbremsung die Bremse des Kraftwagens in die Bremsstellung bringt oder dort hält, wenn eine Notbremsung, egal ob autonom oder vom Fahrer initiiert, durchgeführt worden ist.

Um zu verhindern, dass das Fahrerassistenzsystem gegen den Willen des Fahrers die Bremsen aktiviert oder deaktiviert, ist gemäß einer bevorzugten Ausführungsform vorgesehen, dass eine Deaktivierungsvorrichtung zum manuellen Deaktivieren des Fahrerassistenzsystems vorgesehen ist.

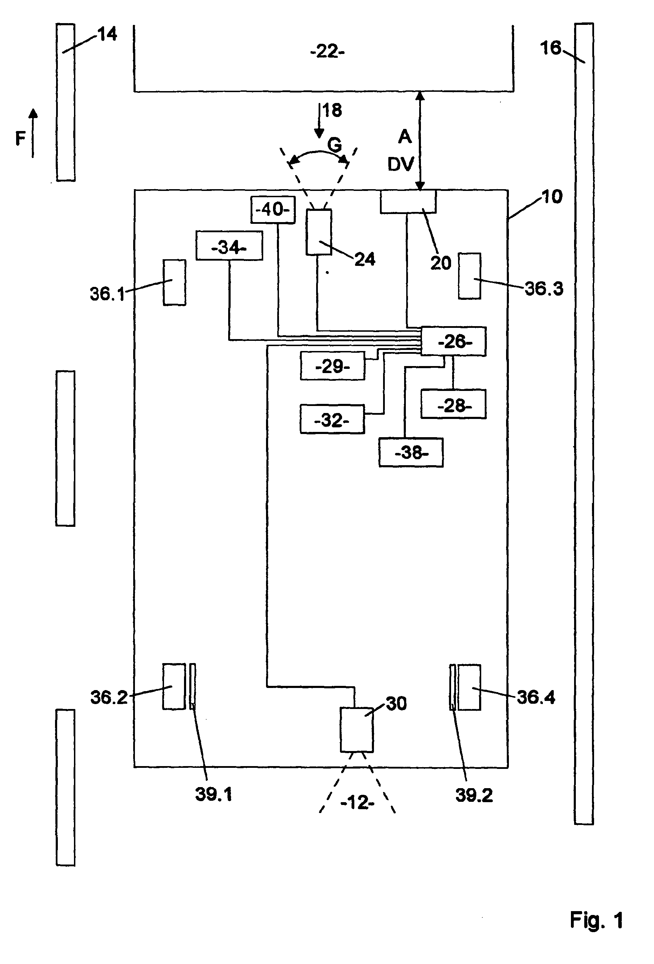

Im Folgenden wird eine Ausführungsform der Erfindung anhand der beigefügten Zeichnung näher erläutert. Dabei zeigt
- Figur 1: einen erfindungsgemäßen Kraftwagen.

Figur 1 zeigt einen Kraftwagen 10, der beim Betrieb auf einer Fahrbahn 12 in eine Fahrtrichtung F fährt. Die Fahrbahn 12 weist in Fahrtrichtung links eine Fahrstreifenmarkierung 14 und in Fahrtrichtung rechts eine Fahrstreifenbegrenzungsmarkierung 16 auf. An einer Vorderseite 18 des Kraftwagens 10 befindet sich ein Fahrdatensensor 20 in Form eines Radar-Abstandsmessers, der einen Abstand A zu einem vorausfahrenden Fahrzeug 22 in Zeitabständen von beispielsweise weniger als einer Sekunde, also quasi-kontinuierlich, erfasst.

An der Vorderseite 18 besitzt der Kraftwagen 10 eine Spurhaltekamera 24, deren Spurhaltekamera-Gesichtsfeld G so eingerichtet ist, dass die Fahrstreifenmarkierung 14 und die Fahrstreifenbegrenzungsmarkierung 16 erfassbar sind. Von der Spurhaltekamera 24 aufgenommene Bilder werden an eine elektrische Steuerung 26 übermittelt, die auch in Kontakt mit dem Fahrdatensensor 20 steht. Aus den Fahrdaten des Fahrdatensensors 20 und Bildern der Spurhaltekamera 24 ermittelt die elektrische Steuerung 26 kontinuierlich, ob eine Fahrsituation des Kraftwagens 10 vorliegt, die eine autonome Teil- oder Vollbremsung erforderlich macht.

Zur Rekonstruktion eines etwaigen Unfallgeschehens, ist ein Unfalldatenschreiber 28 vorgesehen, in den von der elektrischen Steuerung 26 gepuffert Daten, insbesondere Bilder der Spurhaltekamera 24, geschrieben werden. Der Kraftwagen 10 umfasst zudem einen Verzögerungssensor 29, eine Rückfahrkamera 30, einen Gierratensensor 32 und einen Lenkwinkelsensor 34, die alle in Kontakt mit der elektrischen Steuerung 26 stehen.

Wenn die elektrische Steuerung 26 Daten erfasst, die aufgrund eines intern ablaufenden Algorithmus das Vorliegen einer Notbrems-Situation nahe legen, steuert die elektrische Steuerung 26 Betriebsbremsen 36.1, 36.2, 36.3, 36.4 an, die den Kraftwagen 10 mit maximaler Verzögerung abbremsen. Im Folgenden bezeichnen Bezugszeichen ohne Zählsuffix das jeweilige Objekt als solches. Wenn ein Geschwindigkeitssensor 38 eine Geschwindigkeit erfasst, die so gering ist, dass sie als Null angesehen werden kann, vergleicht die elektrische Steuerung 26 den Abstand A mit einem vorgegebenen Schwellenwert A_{Schwelle}. Wird dieser Schwellenwert A_{Schwelle} unterschritten, so ist das ein Zeichen dafür, dass sich ein vorausfahrendes Fahrzeug 22 dicht vor dem Kraftwagen 10 befindet. Der Schwellenwert A_{Schwelle} kann beispielsweise 3 m betragen.

Unterschreitet der Abstand A den Schwellenwert A_{Schwelle}, so sendet die elektrische Steuerung 26 ein Signal an Feststellbremsen 39.1, 39.2, die daraufhin in eine Bremsstellung übergehen und den Kraftwagen 10 sicher abstellen. Fährt nun ein weiteres Fahrzeug von hinten auf den Kraftwagen 10 auf, so kommt es nicht zu einem Auffahren auf das Vorder-Fahrzeug 22.

Ist der Abstand A größer als der Schwellenwert A_{Schwelle}, so sendet die elektrische Steuerung 26 ein Signal, so dass etwaig aktivierte Feststellbremsen 39.1, 39.2 in eine Lösestellung gebracht werden.

Im Kraftwagen 10 ist zudem eine Deaktivierungsvorrichtung 40 vorgesehen, die dann, wenn sie betätigt wird, dazu führt, dass die elektrische Steuerung 26 die Betriebsbremsen 36 nur noch so betätigt, wie es einer Stellung eines nicht eingezeichneten Bremspedals entspricht und dass die Feststellbremsen 39 in eine solche Stellung gebracht werden, die der Betätigungsschalterstellung eines vom Fahrer betätigbaren Betätigungsschalters entspricht.

## Patentansprüche

1. Fahrerassistenzsystem für einen Kraftwagen (10), mit:
(a) mindestens einem Fahrdatensensor (20) zum Erfassen von den Fahrzustand des Kraftwagens (10) charakterisierenden Fahrdaten und
(b) einer elektrischen Steuerung (26), die ausgebildet ist, um bei einem Vorliegen von vorbestimmten Fahrdaten eine autonome Notbremsung des Kraftwagens (10) **dadurch** auszulösen, dass sie ein entsprechendes Notbremssignal an eine Betriebsbremse des Kraftwagens (10) sendet,
(c) einer Vorderfahrzeugdetektionseinrichtung, die eingerichtet ist zum Detektieren eines sich in einer Fahrtrichtung des Kraftwagens (10) vor dem Kraftwagen (10) befindenden Vorder-Fahrzeugs (22),
(d) wobei die elektrische Steuerung (26) eingerichtet ist, um nach einer Notbremsung dann, wenn die Vorderfahrzeugdetektionseinrichtung das Vorder-Fahrzeug (22) detektiert, eine Bremse des Kraftwagens (10) in einer Bremsstellung zu halten oder in die Bremsstellung zu bringen,
**dadurch gekennzeichnet, dass** die elektrische Steuerung (26) eingerichtet ist,
- nach der Notbremsung dann, wenn die Vorderfahrzeugdetektionseinrichtung das Vorder-Fahrzeug detektiert, eine Feststellbremse des Kraftwagens (10) in die Bremsstellung zu bringen.

2. Fahrerassistenzsystem nach Anspruch 1, **dadurch gekennzeichnet, dass** die elektrische Steuerung (26) eingerichtet ist, um nach einer Notbremsung dann, wenn die Vorderfahrzeugdetektionseinrichtung kein Vorder-Fahrzeug (22) detektiert, die Bremse in eine Lösestellung zu bringen.

3. Fahrerassistenzsystem nach Anspruch 1 oder 2, **dadurch gekennzeichnet, dass** die elektrische Steuerung (26) so eingerichtet ist, dass sie die Bremse dann in die Bremsstellung bringt, wenn der Kraftwagen (10) nach einem Stillstand aufgrund einer Notbremsung zunächst steht und anschließend wieder anrollt.

4. Fahrerassistenzsystem nach einem der vorstehenden Ansprüche, **gekennzeichnet durch** eine Deaktiviereinrichtung (40) zum manuellen Deaktivieren des Fahrerassistenzsystems.

5. Kraftwagen mit einer Betriebsbremse, einer Feststellbremse und einer elektrischen Steuerung (26) nach einem der vorstehenden Ansprüche.

6. Verfahren zum Betreiben eines Kraftwagens (10), mit den Schritten:
(i) Erfassen, ob eine Notbremsung durchgeführt wurde,
(ii) wenn ja, Erfassen, ob sich in einer Fahrtrichtung des Kraftwagens (10) vor dem Kraftwagen (10) ein Vorder-Fahrzeug (22) befindet,
(iii) wenn ja, Erfassen, ob der Kraftwagen (10) steht, und
(iv) wenn ja, Bringen einer Feststellbremse in eine Bremsstellung.

7. Verfahren nach Anspruch 6, **dadurch gekennzeichnet, dass** eine Deaktiviereinrichtung (40) ausgelesen wird und dann, wenn die Deaktiviervorrichtung (40) betätigt wurde, die Feststellbremse gelöst wird.

## Claims

1. Driver assistance system for a motor vehicle (10), having:
(a) at least one driving data sensor (20) for sensing driving data which characterize the driving state of the motor vehicle (10) and
(b) an electrical controller (26) which is designed to initiate an autonomous emergency braking operation of the motor vehicle (10) when predetermined driving data are present, by virtue of the fact that it transmits a corresponding emergency braking signal to a service brake of the motor vehicle (10),
(c) a preceding vehicle detection device which is configured to detect a preceding vehicle (22) located in front of the motor vehicle (10) in a direction of travel of the motor vehicle (10),
(d) wherein the electrical controller (26) is configured to hold a brake of the motor vehicle (10) in a braking position or to move it into the braking position after an emergency braking operation if the preceding vehicle detection device detects the preceding vehicle (22),
**characterized in that** the electrical controller (26) is configured
- to move a parking brake of the motor vehicle (10) into the braking position after the emergency braking operation if the preceding vehicle detection device detects the preceding vehicle.

2. Driver assistance system according to Claim 1, **characterized in that** the electrical controller (26) is configured to move the brake into a release position after an emergency braking operation if the preceding vehicle detection device does not detect a preceding vehicle (22).

3. Driver assistance system according to Claim 1 or 2, **characterized in that** the electrical controller (26) is configured in such a way that it moves the brake into the braking position when the motor vehicle (10) is initially stationary after a stationary state owing to an emergency braking operation, and subsequently starts to roll again.
- to trigger an autonomous emergency braking operation of the motor vehicle (10)

4. Driver assistance system according to one of the preceding claims, **characterized by** a deactivation device (40) for manually deactivating the driver assistance system.

5. Motor vehicle having a service brake, a parking brake and an electrical controller (26) according to one of the preceding claims.

6. Method for operating a motor vehicle (10), having the steps:
(i) sensing whether an emergency braking operation has been carried out,
(ii) if this is the case, sensing whether a preceding vehicle (22) is located in front of the motor vehicle (10) in a direction of travel of the motor vehicle (10),
(iii) if this is the case, sensing whether the motor vehicle (10) is stationary, and
(iv) if this is the case, moving the parking brake into a braking position.

7. Method according to Claim 6, **characterized in that** a deactivation device (40) is read, and when the deactivation device (40) has been activated the parking brake is released.

## Revendications

1. Système d'assistance au conducteur pour un véhicule automobile (10) comprenant :
(a) au moins un capteur de données de déplacement (20) pour détecter des données de déplacement qui caractérisent l'état de déplacement du véhicule automobile (10) et
(b) une commande électrique (26) qui est configurée pour déclencher, en présence de données de déplacement prédéfinies, un freinage d'urgence autonome du véhicule automobile (10) de telle sorte qu'elle envoie un signal de freinage d'urgence correspondant à un frein de service du véhicule automobile (10),
(c) un dispositif de détection de véhicule avant qui est conçu pour détecter un véhicule avant (22) qui se trouve devant le véhicule automobile (10) dans un sens de déplacement du véhicule automobile (10),
(d) la commande électrique (26) étant conçue pour, après un freinage d'urgence, lorsque le dispositif de détection de véhicule avant détecte le véhicule avant (22), bloquer un frein du véhicule automobile (10) dans une position de freinage ou l'amener dans la position de freinage,
**caractérisé en ce que** la commande électrique (26) est conçue pour, après le freinage d'urgence, lorsque le dispositif de détection de véhicule avant détecte le véhicule avant, amener un frein de stationnement du véhicule automobile (10) en position de freinage.

2. Système d'assistance au conducteur selon la revendication 1, **caractérisé en ce que** la commande électrique (26) est conçue pour, après un freinage d'urgence, lorsque le dispositif de détection de véhicule avant ne détecte pas de véhicule avant (22), amener le frein dans une position desserrée.

3. Système d'assistance au conducteur selon la revendication 1 ou 2, **caractérisé en ce que** la commande électrique (26) est conçue de telle sorte qu'elle amène le frein dans la position de freinage lorsque le véhicule automobile (10), après une immobilisation en raison d'un freinage d'urgence, est tout d'abord à l'arrêt et commence ensuite de nouveau à rouler.

4. Système d'assistance au conducteur selon l'une des revendications précédentes, **caractérisé par** un dispositif de désactivation (40) pour désactiver manuellement le système d'assistance au conducteur.

5. Véhicule automobile muni d'un frein de service, d'un frein de stationnement et d'une commande électrique (26) selon l'une des revendications précédentes.

6. Procédé d'exploitation d'un véhicule automobile (10) comprenant les étapes suivantes :
(i) détecter l'exécution ou non d'un freinage d'urgence,
(ii) dans l'affirmative, détecter la présence ou non d'un véhicule avant (22) devant le véhicule automobile (10) dans un sens de déplacement du véhicule automobile (10),
(iii) dans l'affirmative, détecter l'immobilité ou non du véhicule automobile (10) et
(iv) dans l'affirmative, amener un frein de stationnement dans une position de freinage.

7. Procédé selon la revendication 6, **caractérisé en ce qu'**un dispositif de désactivation (40) est surveillé et le frein de stationnement est desserré lorsque le dispositif de désactivation (40) a été actionné.
